# EUROPÄISCHE PATENTANMELDUNG

(11) **EP 1 260 428 A2**
(43) Veröffentlichungstag der Anmeldung: **27.11.2002**
(21) Anmeldenummer: 02009514.7
(22) Anmeldetag: 26.04.2002
(51) Int. Cl.: B62D 55/00, B60K 17/10

(54) **Hydraulische Antriebseinheit für einen Raupenantrieb eines Raupenfahrzeuges**

(30) Priorität: 21.05.2001 DE 10125715
(71) Anmelder: Kässbohrer Geländefahrzeug AG, 88471 Laupheim (DE)
(72) Erfinder: Zambelli, Hans-Dieter, 5302 Henndorf a. Wallersee (AT)
(74) Vertreter: Wilhelm, Peter

(57) **Zusammenfassung**

2.1 Eine Hydraulische Antriebseinheit für einen Raupenantrieb eines Raupenfahrzeugs mit wenigstens einem Hydraulikkreis, der wenigstens einen Hydromotor sowie wenigstens eine durch einen Hauptantrieb verstellbare Fördereinrichtung aufweist, sowie mit Mitteln zur Druckabsicherung des Hydraulikkreises, ist bekannt.
2.2 Erfindungsgemäß ist vorgesehen, dass die Mittel zur Druckabsicherung wengistens einen in den Hydraulikkreis integrierten Drucksensor aufweisen, der den hydraulischen Druck im Hydraulikkreis erfasst und entsprechende Drucksignale an eine elektronische Steuereinheit übermittelt, die den Hauptantrieb ansteuert, abhlängig von einem Vergleich der Drucksignale mit Sollwerten aus einem Kennwertspeicher.
2.3 Einsatz für Raupenfahrzeuge zur Präparierung von Schneepisten.

## Beschreibung

Die Erfindung betrifft eine hydraulische Antriebseinheit für einen Raupenantrieb eines Raupenfahrzeuges mit wenigstens einem Hydraulikkreis, der wenigstens einen Hydromotor sowie wenigstens eine durch einen Hauptantrieb verstellbare Fördereinrichtung aufweist, sowie mit Mitteln zur Druckabsicherung des Hydraulikkreises.

Raupenfahrzeuge, die insbesondere für die Präparierung von Schneepisten ausgelegt sind, sind allgemein bekannt. Ein solches Raupenfahrzeug weist auf jeder Fahrzeugseite jeweils ein Raupenfahrwerk auf, die durch jeweils einen hydraulischen Antriebsstrang angetrieben werden. Jede hydraulische Antriebsseite weist einen Hydraulikkreis auf, der mit wenigstens einem Hydromotor sowie wenigstens einer verstellbaren Fördereinrichtung versehen ist. Gespeist wird jeder Hydraulikkreis durch eine Fahrpumpeneinheit, die durch einen Hauptantrieb, insbesondere einen Verbrennungsmotor, angetrieben ist. Der Verbrennungsmotor ist üblicherweise als Dieselmotor ausgelegt.

Die Hydromotoren wirken jeweils auf ein Antriebsrad ihres Raupenfahrwerkes, wodurch die jeweilige Raupe angetrieben wird. Aus den Fördervolumina der verstellbaren Fördereinrichtungen und den Schluckvolumina der Hydromotoren ergibt sich eine definierte Übersetzung, die die maximalen Drehzahlen und Drehmomente am jeweiligen Antriebsrad der Raupe bestimmen. Die Grenze für das maximale Drehmoment ergibt sich aus der zulässigen Druckdifferenz zwischen Hochdruck und Füllpumpendruck. Zur Druckabsicherung jedes Hydraulikkreises sind mechanische, federbelastete Ventile vorgesehen. Hierfür werden zwei voneinander unabhängige Systeme eingesetzt. Zum einen direkt wirkende Hochdruckventile, die als Druckbegrenzer für den maximal zulässigen Höchstdruck dienen. Zum anderen sogenannte "Nullhubregler", die die verstellbaren Fördereinrichtungen beim Erreichen eines vorgegebenen Hochdruckes in Richtung kleiner Schwenkwinkel zurückstellen, bis der Druck im Hydraulikkreis absinkt.

Der Einsatz von federbelasteten Ventilen hat sich als nachteilig herausgestellt, da Setzerscheinungen bei den Federn auftreten, wodurch nach relativ kurzer Laufzeit sinkende Druckgrenzwerte entstehen. Um dem entgegenzuwirken, wurden in der Praxis hohe Anfangs-Einstellwerte vorgesehen. Diese hohen Werte führen jedoch zu hohen mechanischen Belastungen der Getriebe. Da beide Antriebsseiten des Raupenfahrzeuges unabhängig voneinander hydraulisch gesteuert werden, konnten auf den beiden Fahrzeugseiten unterschiedliche Druckgrenzen auftreten, die kein korrektes Zusammenspiel bei einem Lenkvorgang mehr ermöglichten. Dadurch entstand ein relativ unkontrollierbares Fahr- und Lenkverhalten.

Aufgabe der Erfindung ist es, eine hydraulische Antriebseinheit der eingangs genannten Art zu schaffen, die eine ausreichende Druckbegrenzung des wenigstens einen Hydraulikkreises ermöglicht und dennoch ein sicheres Fahr- und Lenkverhalten gewährleistet.

Diese Aufgabe wird dadurch gelöst, daß die Mittel zur Druckabsicherung wenigstens einen, in den Hydraulikkreis integrierten Drucksensor aufweisen, der den hydraulischen Druck im Hydraulikkreis erfaßt und entsprechende Drucksignale an eine elektronische Steuereinheit übermittelt, die den Hauptantrieb ansteuert, abhängig von einem Vergleich der Drucksignale mit Sollwerten aus einem Kennwertspeicher. Als Drucksensor ist insbesondere eine elektrische Messpatrone vorgesehen, die in die Hochdruckleitung des hydrostatischen Antriebskreises eingebaut wird. Die hydraulische Ansteuerung eines derartigen Druckmessgebers erfolgt vorzugsweise über einen hydraulischen Gleichrichter mit Hilfe von vier Rückschlagventilen. Die elektrische Messpatrone registriert den höchsten hydraulischen Druck und gibt ein Signal an eine Fahr- und Lastbegrenzungselektronik der elektronischen Steuereinheit, die die Antriebe und die Lenkung steuert. Vorzugsweise weist die Fahrelektronik einen zusätzlichen Regelkreis auf, der auf zu hohe Drücke reagiert und die Ausgangsspannung für das gesamte Fahrzeug und für beide Antriebsseiten senkt. Durch die erfindungsgemäße Lösung ist es möglich, das Raupenfahrzeug mittels der elektronischen Steuereinheit und der Fahr- und Lastbegrenzungselektronik in vorgegebenen Kennfeldern zu fahren, wodurch eine Überlastung der Antriebe vermieden wird. Setzerscheinungen von Ventilen treten nicht auf. Dadurch können über einen langen Zeitraum gleichbleibende Drücke in den Hydraulikkreisen erzielt werden. Auch bei hohen Lasten behält das Raupenfahrzeug gute und gleichmäßige Lenkeigenschaften bei. Erwärmungen des Hydrauliköls werden vermieden.

## Patentansprüche

1. Hydraulische Antriebseinheit für einen Raupenantrieb eines Raupenfahrzeuges mit wenigstens einem Hydraulikkreis, der wenigstens einen Hydromotor sowie wenigstens eine durch einen Hauptantrieb verstellbare Fördereinrichtung aufweist, sowie mit Mitteln zur Druckabsicherung des Hydraulikkreises, **dadurch gekennzeichnet, daß** die Mittel zur Druckabsicherung wenigstens einen in den Hydraulikkreis integrierten Drucksensor aufweisen, der den hydraulischen Druck im Hydraulikkreis erfaßt und entsprechende Drucksignale an eine elektronische Steuereinheit übermittelt, die den Hauptantrieb ansteuert, abhängig von einem Vergleich der Drucksignale mit Sollwerten aus einem Kennwertspeicher.
